# EUROPÄISCHE PATENTANMELDUNG

(11) **EP 0 796 594 A2**
(43) Veröffentlichungstag der Anmeldung: **24.09.1997**
(21) Anmeldenummer: 97103909.4
(22) Anmeldetag: 08.03.1997
(51) Int. Cl.: A61C 8/00

(54) **Aufbauteil für zahnärztliche Suprakonstruktionen**

(30) Priorität: 21.03.1996 DE 29605296 U
(71) Anmelder: Zahntechnisches Atelier Lothar Glass GmbH, 71384 Weinstadt (DE); Hartmann, Hans-Jürgen, Dr., 82327 Tutzing (DE)
(72) Erfinder: Glass, Lothar, 71384 Weinstadt (DE); Hartmann, Hans-Jürgen, Dr., 82327 Tutzing (DE)
(74) Vertreter: KOHLER SCHMID + PARTNER

(57) **Zusammenfassung**

Ein Aufbauteil für zahnärztliche Suprakonstruktionen (9) zur Verankerung in einem Implantatpfostens (4), mit einem pfosten-seitigen Verankerungsabschnitt (6) zur Befestigung der Suprakonstruktion (9), ist dadurch gekennzeichnet, daß das Aufbauteil pfosten-seitig eine umlaufende, auf der aus dem Kieferknochen (2) herausragenden Oberseite des Implantatpfostens (4) plan aufliegende Abschlußplatte (14) aus Metall, vorzugsweise aus Titan, aufweist, die im aufmontierten Zustand des Aufbauteils auf dem Implantatpfosten (4) die Aufnahmebohrung (5) des Implantatpfostens (4) nach außen hin abschließt, und daß auf der pfosten-abgewandten Seite der Abschlußplatte (14) eine umlaufende Keramikmanschette (13) aufgesintert oder aufgeklebt ist. Damit wird die Montage des Implantatsystems möglichst vereinfacht, wobei im montierten Zustand die kritische Schmutzzone im Bereich zwischen Kieferknochen und Außenfläche der Gingiva ohne Berührung mit metallischen Oberflächen überbrückt wird, und wobei mechanische Ungenauigkeiten und dadurch resultierende mangelnde Paßgenauigkeit des Systems vermieden wird.

## Beschreibung

Die Erfindung betrifft ein Aufbauteil für zahnärztliche Suprakonstruktionen wie Stege, Kronen, Brücken usw. zur Verankerung in einem im Kiefer eines Patenten implantierten Implantatpfosten, mit einem pfosten-seitigen Verankerungsabschnitt zum Einstecken oder Einschrauben des Aufbauteils in eine axiale Aufnahmebohrung des Implantatpfostens.

Ein derartiges Aufbauteil ist beispielsweise bekannt aus dem deutschen Gebrauchsmuster G 87 16 446.9.

Implantate mit derartigen Aufbauteilen werden in zunehmendem Umfang verwendet, um Teil- oder Vollprothesen dauerhaft am Kiefer eines Patienten festzulegen, damit auf diese Weise ein voll funktionsfähiges, durch entsprechenden Zahnersatz ergänztes bzw. ersetztes Gebiß erhalten werden kann, welches dem Patienten ein einwandfreies Zerkauen von Speisen ermöglicht und damit eine gesundheitlich sehr wichtige Funktion erfüllt. Dabei ist auch zu bedenken, daß schlecht sitzende Voll- oder Teilprothesen auch die Gefahr mit sich bringen, daß der Träger der Prothesen wegen der Schwierigkeiten beim Kauen physiologisch wichtige Nahrungsmittel wie frisches Obst, Rohkostsalate und härtere Gemüsesorten nicht oder nur noch in beschränktem Maße zu sich nimmt. Daher ist eine sichere, feste Verbindung der Suprakonstruktion mit dem im Kiefer des Patienten fest implantierten Implantatpfosten besonders wichtig.

Auf dem Dentalmarkt sind zwischenzeitlich sehr viele unterschiedliche Implantantkonstruktionen mit Implantatpfosten und dazu passenden Aufbauteilen erhältlich, wie beispielsweise dem "Handbuch zum BDIZ Implantat-Register", herausgegeben von H. B. Engels in Zusammenarbeit mit dem Qualifikationsausschuß des Bundesverbands der niedergelassenen implantologisch tätigen Zahnärzte in Deutschland e.V., Bonn, 1994 ersichtlich ist. Der in den Kiefer eingelassene Implantatpfosten kann dabei die unterschiedlichsten Ausformungen aufweisen. Meist ist er länglich ausgeführt und mit einem kieferseitigen Gewinde versehen (siehe z.B. Seite 16 des oben genannten Handbuchs); es sind jedoch auch flächig im Kiefer verankerte Implantate bekannt (siehe z.B. Seite 81f des oben zitierten Handbuch), an denen einer oder mehrere Pfosten angebracht sind, deren oberes Ende jeweils aus dem Kiefer herausragt und ein Aufbauteil für die entsprechende Suprakonstruktion aufnehmen soll. Als Material für die Implantate wird meist Titan oder ein ähnliches biokompatibles Metall verwendet.

In einer noch größeren Anzahl als die Implantate sind die auf unterschiedlichste Weise ausgestalteten Aufbauteile für die Suprakonstruktionen am Markt erhältlich. Sie können ein- oder mehrteilig, aufsteckbar oder aufschraubbar, aus verschiedenen Metallen oder teilweise auch aus anderen Materialien aufgebaut sein, wobei der Hauptkorpus des Aufbauteils aber immer aus Metall besteht.

Auch in der Patentliteratur finden sich viele Beispiele für derartige Implantatkonstruktionen, beispielsweise die US-PS 4,934,935, die US-PS 4,516,937, die DE 33 15 329 C2, die DE 34 13 811 C2, die DE 41 27 436 A1, die EP 0 428 549 B1 oder die WO 92/10145 A1.

Nachteilig bei den einteiligen, nur aus Metall (oder auch Kunststoff) aufgebauten Aufbauteilen ist die erhebliche Gefahr einer späteren Verschmutzung, insbesondere einer Belegung des Aufbauteils mit als Bakteriennährboden wirkender Plaque aufgrund der Oxydation der metallischen Oberfläche im Bereich der kritischen Zone (Schmutzzone) zwischen Kieferknochen und Außenfläche der Gingiva. Um in dieser kritischen Schmutzzone, in die gerne Speisebrei und ähnliche das Bakterienwachstum anregende und damit Entzündungen der Gingiva hervorrufende Substanzen eindringen können, eine Oxydation der Außenhaut des Aufbauteils, das an dieser Stelle durch die Gingiva nach außen durchstößt, zu vermeiden, werden mehrteilige Aufbauten verwendet, wobei im Bereich der kritischen Zone Kunststoff- oder Keramikmanschetten zum Einsatz kommen, deren Oberflächen für mögliche Anlagerungen abweisend sind und die nicht oxydieren (siehe z.B. Seite 115 im oben zitierten "Handbuch zum BDIZ Implantatregister"). Nachteilig bei der Verwendung derartiger Keramikhülsen ist das häufige Platzen beim Aufschrauben des Aufbauteils auf den Implantatpfosten aufgrund des wirkenden Anpreßdrucks. Außerdem ist bei derartigen mehrteiligen Aufbauten keine genaue Positionierung möglich, weil bei der Montage des Implantatsystems immer eine gewisse Auslenkung der Hülse erfolgt, so daß mechanische Ungenauigkeiten zu einer mangelnden Paßgenauigkeit des gesamten Implantatsystems führen.

Aufgabe der vorliegenden Erfindung ist es demgegenüber, ein Aufbauteil für zahnärztliche Suprakonstruktionen zur Verankerung in einem Implantatpfosten mit den eingangs angegebenen Merkmalen dahingehend zu verbessern, daß die Montage des Implantatsystems möglichst vereinfacht wird, wobei im montierten Zustand die kritische Schmutzzone im Bereich zwischen Kieferknochen und Außenfläche der Gingiva möglichst ohne Berührung mit metallischen Oberflächen überbrückt wird, und wobei mechanische Ungenauigkeiten und dadurch resultierende mangelnde Paßgenauigkeit des Systems vermieden wird.

Erfindungsgemäß wird diese Aufgabe auf ebenso überraschend einfache wie wirkungsvolle Weise dadurch gelöst, daß das Aufbauteil pfosten-seitig eine umlaufende, auf der aus dem Kieferknochen herausragenden Oberseite des Implantatpfostens plan aufliegende Abschlußplatte aus Metall, vorzugsweise aus Titan, aufweist, die im aufmontierten Zustand des Aufbauteils auf dem Implantatpfosten die Aufnahmebohrung des Implantatpfostens nach außen hin nahezu hermetisch abschließt, und daß auf der pfosten-abgewandten Seite der Abschlußplatte eine umlaufende Manschette aus Keramik, vorzugsweise aus AlO₂-Material, befestigt, vorzugsweise aufgesintert oder aufgeklebt ist.

Durch die erfindungsgemäße Verwendung einer Abschlußplatte sitzt das Aufbauteil großflächig und mit sehr gutem Halt auf dem Implantatpfosten auf. Die kritische Schmutzzone wird durch die aufgesinterte Keramikmanschette überbrückt, so daß die oben geschilderten hygienischen Probleme nicht auftreten. Durch die einstückige Konstruktion des Aufbauteils wird die Montage des Implantatsystems besonders vereinfacht und die Paßgenauigkeit wesentlich erhöht. Aufgrund des Aufsinterns oder Aufklebens der Keramikmanschette auf die metallische Abschlußplatte und des damit bewirkten hermetischen Abschlusses zwischen Metall und Keramik können weder Luft noch Schmutzpartikel in Nischen zwischen den Einzelteilen geraten.

Bei besonders bevorzugten Ausführungsformen weist die Keramikmanschette des erfindungsgemäßen Aufbauteils eine axiale Höhe zwischen 0,5 und 5 mm, vorzugsweise zwischen 1,0 und 3,5 mm auf. Dies entspricht in den meisten Fällen gerade der Höhe der kritischen Zone im Bereich zwischen Kieferknochen und Außenfläche der Gingiva.

Der mittlere Außendurchmesser der Keramikmanschette sollte zwischen 3 und 6 mm betragen, damit einerseits genügend Raum für die radiale Ausdehnung des Aufbauteils, insbesondere im Hinblick auf die mechanische Festigkeit des Implantatsystems vorhanden ist, andererseits aber kein zu großes Loch in der Gingiva angelegt werden muß.

Bei Weiterbildungen sind abgestufte Sortimente von Keramikmanschetten mit Außendurchmessern 3,5 mm, 3,8 mm, 4,0 mm und 4,5 mm vorhanden. Damit können in der Regel die meisten praktischen Einsatzfälle abgedeckt werden.

Bei Ausführungsformen kann die Keramikmanschette baubedingt durch ein entsprechendes Implantatsystem im wesentlichen zylindrisch gestaltet sein.

Bevorzugt sind aber auch Ausführungsformen des erfindungsgemäßen Aufbauteils, bei denen die Keramikmanschette konisch auf die Abschlußplatte zulaufend geformt ist. Dadurch ergibt sich im oberen, dem Kiefer abgewandten Bereich ein größerer Durchmesser für den Befestigungsabschnitt, wodurch ein besserer mechanischer Halt des Suprakonstruktionen erzielt werden kann.

Besonders bevorzugt ist eine Ausführungsform, bei der die Keramikmanschette auf ihrer der Abschlußplatte abgewandten Seite eine kalottenförmige oder konische, nach außen sich erweiternde Ausnehmung zur Aufnahme kugel-, kegel- oder zylinderförmiger Teile aufweist. Dadurch können kugelige, kegelige oder zylinderförmige Anschlußteile, die auf ihrer anderen Seite die Suprakonstruktion enthalten, paßgenau und mechanisch festsitzend auf die pfosten-abgewandte Seite der Keramikmanschette aufgebracht werden.

Die Abschlußplatte des erfindungsgemäßen Aufbauteils hat vorzugsweise eine Dicke von 0,01 mm bis 0,1 mm. Dadurch kommt lediglich ein äußerst geringer Bereich der kritischen Zone zwischen Kieferknochen und Außenfläche der Gingiva mit metallischer Oberfläche in Berührung, während die restliche Strecke erfindungsgemäß durch die Keramikmanschette überbrückt wird.

Besonders bevorzugt sind Ausführungsformen, bei denen die Abschlußplatte dieselbe radiale Erstreckung wie die Keramikmanschette an ihrer Auflagefläche auf der Abschlußplatte aufweist. Damit wird mechanisch eine optimale Auflagefläche für die Keramikmanschette bereitgestellt und eine Nischenbildung und daraus resultierendes Bakterienwachstum, was zu Entzündungen der Gingiva führen könnte, vermieden.

Der Verankerungsabschnitt des erfindungsgemäßen Aufbauteils wird in der Regel geometrisch kompatibel mit den handelsüblichen Implantatpfosten mit Schraub- oder Steckanschluß gestaltet sein. Da das erfindungsgemäße Aufbauteil aber so gut wie keine geometrischen Randbedingungen am pfosten-seitigen Ende vorgibt, kann es auch kompatibel mit nahezu beliebigen Sonderkonstruktionen des Implantatpfostens gestaltet werden. Neben Zylinderimplantaten können auch Stufenzylinder, Schraubenimplantate oder Blattimplantate mit dem erfindungsgemäßen Aufbauteil versehen werden.

Bevorzugt sind Ausführungsformen des erfindungsgemäßen Aufbauteils, bei denen der Verankerungsabschnitt ein an die Aufnahmebohrung des Implantatpfostens angepaßtes, in diese einsteckbares Eingriffsteil aufweist. Mit diesem Eingriffsteil kann eine mechanisch besonders sichere, festsitzende Verbindung zwischen Aufbauteil und Implantatpfosten hergestellt werden.

Eine vorteilhafte Weiterbildung dieser Ausführungsform zeichnet sich dadurch aus, daß eine durch eine axiale Durchgangsbohrung des Aufbauteils, die vorzugsweise als Gewindebohrung ausgestaltet ist, in die Aufnahmebohrung des Implantatpfostens greifende Befestigungsschraube zur Befestigung des Aufbauteils und/oder der Suprakonstruktion am Implantatpfosten vorgesehen ist.

Vorteilhaft ist eine alternative Ausführungsform, bei der am Eingriffsteil des Verankerungsabschnitts ein Außengewinde vorgesehen ist, das in ein entsprechendes Innengewinde in der Aufnahmebohrung des Implantatpfostens eingreift. Damit wird eine Befestigungsschraube überflüssig, was die Montage des Implantatsystems unter Umständen erleichtern kann.

Eine besonders bevorzugte Weiterbildung dieser Ausführungsform ist dadurch gekennzeichnet, daß in einer axialen, vom Befestigungsabschnitt her zugänglichen Bohrung des Aufbauteils ein Innengewinde mit zur Drehrichtung des Außengewindes am Eingriffsteil entgegengesetzter Drehrichtung vorgesehen ist. Auf diese Weise kann zunächst das Aufbauteil auf dem Implantatpfosten, beispielsweise durch ein rechtsdrehendes Gewinde, festgeschraubt werden, und sodann die Suprakonstruktion oder ein weiteres Zwischenstück auch auf dem Befestigungsabschnitt des Aufbauteils durch eine linksdrehende Schraubbewegung.

Alternativ kann einen Innensechskant oder ein Innenachtkant in einer axialen, vom Befestigungsabschnitt her zugänglichen Bohrung des Aufbauteils ausgebildet sein, in den mit einem entsprechenden Werkzeug eingegriffen werden kann.

Die axiale Bohrung im Aufbauteil kann bei Weiterbildungen der oben genannten Ausführungsformen eine leicht herstellbare Durchgangsbohrung sein.

Vorteilhaft sind aber auch alternative Weiterbildungen, bei denen die axiale Bohrung im Aufbauteil eine Sackbohrung ist, die bei vollständigem Eindrehen des Positivgewindeteil Lufteinschlüsse im Bereich des Implantats vermeidet, welche bei durchgängigen Bohrungen praktisch immer vorhanden sein werden.

Vorteilhaft ist auch eine Ausführungsform, bei der das Aufbauteil pfosten-seitig eine als Innensechskant oder Innenachtkant ausgebildete axiale Ausnehmung aufweist, in welche ein entsprechender aus dem Implantatpfosten herausragender Außensechskant bzw. Außenachtkant eingreift. Dadurch kann das Aufbauteil auf den Implantatpfosten aufgesetzt werden und hat auf diesem dann einen sicheren Halt, der beispielsweise durch Anschrauben noch verstärkt werden kann.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematisierte, teilweise Schnittansicht eines Implantatsystems mit erfindungsgemäßem Aufbauteil in seiner Einbausituation im Kiefer eines Patienten;
- Fig. 2: eine schematische Schnittansicht der Ausführungsform des erfindungsgemäßen Aufbauteils nach Fig. 1 in Explosionsdarstellung;
- Fig. 3: Eine Explosionsdarstellung wie Fig. 2, aber mit separatem Befestigungsabschnitt zwischen Suprakonstruktion und Keramikmanschette; und
- Fig. 4: wie Fig. 3, aber mit beidseitigen Gewindeabschnitten am Verankerungsabschnitt.

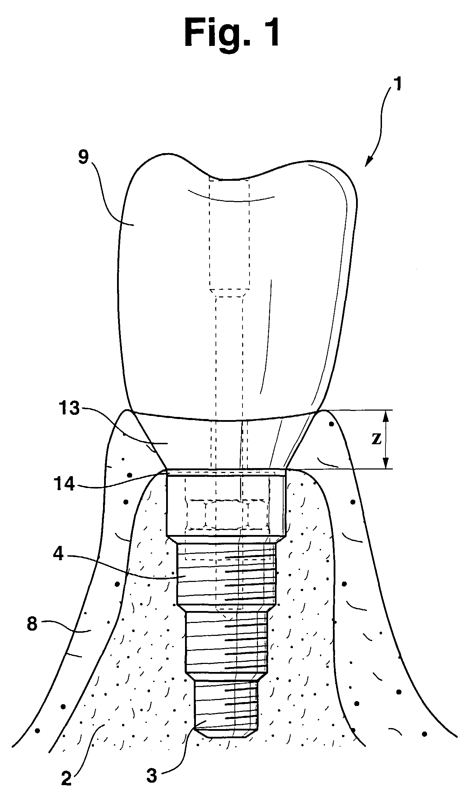

Bei dem in Fig. 1 gezeigten teilweisen Schnittbild durch ein Implantatsystem 1 ist ein in einem Kieferknochen 2 mittels eines selbstschneidenden Gewindes 3, das insbesondere als progressives Sondergewinde mit rauhstrukturierter Oberfläche zur schonenden Lasteinleitung ausgebildet sein kann, fest eingebauter enossaler Implantatpfosten 4 dargestellt, der in der Regel aus Reintitan bestehen wird.

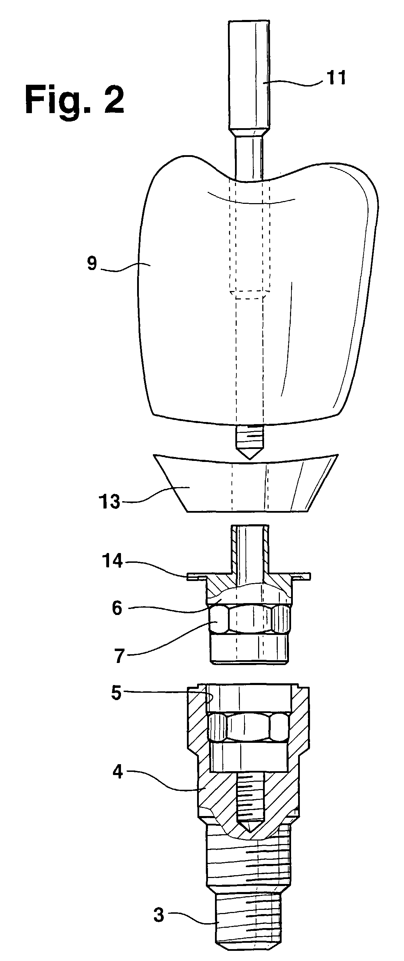

Wie in der Explosionszeichnung Fig. 2 zu erkennen ist, wird in einer axialen Aufnahmebohrung 5 ein Verankerungsabschnitt 6 zur Verankerung eines Aufbauteils im Implantatpfosten 4 eingelassen.

Um die in Fig. 1 gezeigte kritische Zone z zwischen dem Kieferknochen 2 und der Außenfläche der Gingiva 8 im Mund des Patienten zu überbrücken, ist bei dem erfindungsgemäßen Aufbauteil eine auf einer Abschlußplatte 14 des Verankerungsabschnittes 6 aufgesinterte oder aufgeklebte Keramikmanschette 13 vorgesehen, die vorzugsweise aus Aluminiumoxid-Material besteht. Auf einer derartigen Keramikoberfläche bilden sich im Gegensatz zu metallischen Oberflächen praktisch keine Plaque-Ablagerungen, die einen Nährboden für Bakteriennester darstellen würden, was auf Dauer zu Entzündungen des Gingiva-Gewebes führen würde.

An die Oberseite der Keramikmanschette 13 schließt sich eine zahnärztliche Surprakonstruktion 9, beispielsweise eine Krone, eine Brücke usw., an, die an dem Gesamtverband mittels einer Schraube 11 im Implantatpfosten 4 verankert wird. Zusätzlich oder alternativ kann die Suprakonstruktion 9 auch auf der Oberseite der Keramikmanschette 13 aufgeklebt oder aufzementiert werden.

Wie in Fig. 2 näher dargestellt, schließt sich im oberen Bereich des mit einem Außensechskant 7 zur Rotationssicherung versehenen Verankerungsabschnittes 6 die Abschlußplatte 14 des erfindungsgemäßen Aufbauteils an, die in eingebautem Zustand mit ihrer Unterseite auf der obersten Fläche des Implantatpfostens 4 aufliegt, und auf deren Oberseite, vorzugsweise an der Berührungsfläche mit gleichem Radius die Keramikmanschette 13 aufgesintert oder aufgeklebt ist.

Durch das mechanisch feste und fluiddichte Aufbringen der Keramikmanschette 13 auf die Abschlußplatte 14 ist ein hermetischer Abschluß zwischen den beiden Teilen gesichert, so daß keine Schmutzbestandteile, welche zu Bakteriennestern führen könnten, zwischen die beiden Teile eindringen können. Ebenso schließt im zusammenmontierten Zustand die Abschlußplatte 14 die Aufnahmebohrung 5 des Implantatpfostens 4 nahezu hermetisch nach außen hin ab.

Um die kritische Zone z zwischen Kieferknochen 2 und Außenfläche der Gingiva 8 wirksam zu überbrücken, sollte die Keramikmanschette 13 eine axiale Höhe zwischen 0,5 und 5 mm, vorzugsweise zwischen 1 und 1,3 mm aufweisen. Übliche Baugrößen von Außendurchmessern der Keramikmanschette 13 bewegen sich zwischen 3 mm und 6 mm, wobei vorteilhafterweise ein abgestuftes Sortiment von Außendurchmessern der Keramikmanschetten, beispielsweise mit Außendurchmessern 3,5 mm, 3,8 mm, 4,0 mm und 4,5 mm vorhanden sein sollten.

Die äußere Form der Keramikmanschette richtet sich nach der geometrischen Ausbildung des Aufbauteils. Im gezeigten Ausführungsbeispiel läuft die Keramikmanschette 13 in etwa konisch auf die Abschlußplatte 14 zu; es sind jedoch auch Ausführungsbeispiele denkbar, bei denen die Keramikmanschette im wesentlichen zylindrisch ist. Auf ihrer der Abschlußplatte 14 abgewandten Seite kann die Keramikmanschette eine kalottenförmige oder konische, nach außen sich erweiternde Ausnehmung zur Aufnahme kugel-, kegel- oder zylinderförmiger Teile aufweisen.

Die Abschlußplatte 14 des erfindungsgemäßen Aufbauteils sollte in Regel eine relativ geringe Dicke in einem Bereich zwischen 0,01 mm bis 0,1 mm haben, damit die kritische Zone z ganz überwiegend von der Keramikmanschette 13 überbrückt wird, welche, wie oben erwähnt eine erheblich größere axiale Höhe aufweist.

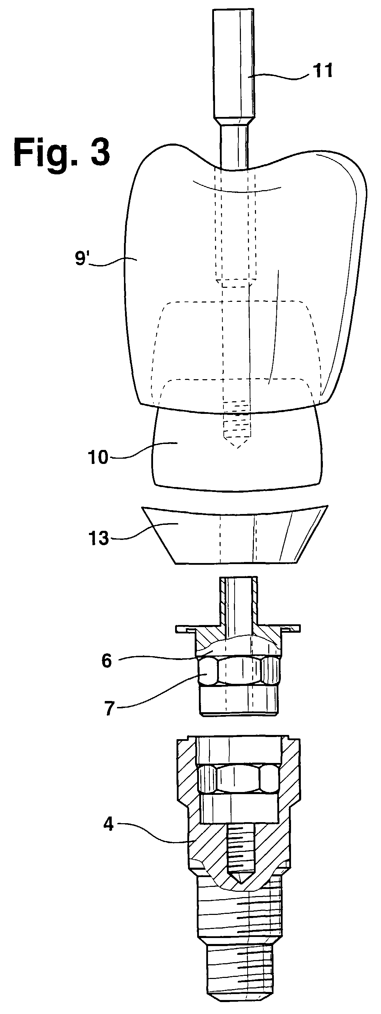

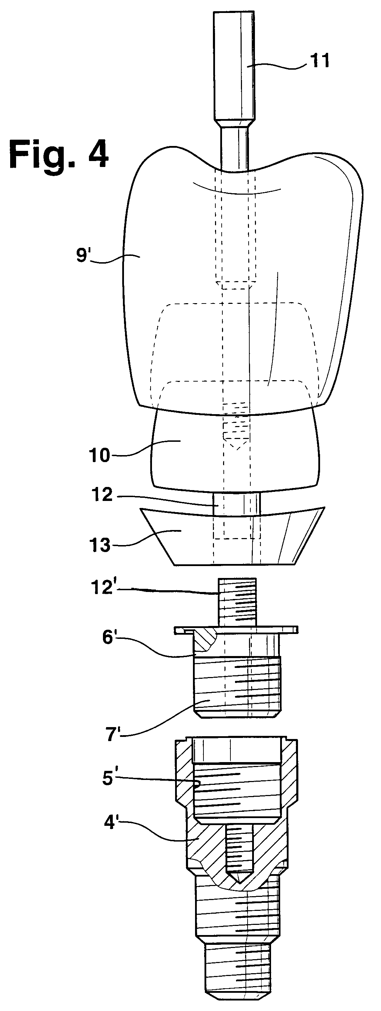

Auf einem Befestigungsabschnitt 10 der in den Fign. 3 und 4 dargestellten Ausführungsformen des erfindungsgemäßen Aufbauteils ist eine zahnärztliche Suprakonstruktion 9 mit einer der Außenkontur des Befestigungsabschitts 10 entsprechenden Ausnehmung, im gezeigten Beispiel eine schematisch dargestellte Krone, aufgebracht. Die mechanische Befestigung der Suprakonstruktion 9' auf dem Befestigungsabschnitt 10 des Aufbauteils kann in unterschiedlichster Weise erfolgen, beispielsweise durch Aufschrauben, Aufzementierung, Aufstecken und dergleichen. Zur Rotationssicherung des Suprakonstruktion 9 können bei nicht dargestellten Ausführungsformen über den Umfang des Befestigungsabschnittes 10 in etwa parallel zur Achse des Aufbauteils verlaufende Nuten vorgesehen sein.

Das Ausführungsbeispiel nach Fig. 4 unterscheidet sich von allen übrigen dargestellten Ausführungsformen, insbesondere von der Ausführungsform nach Fig. 3 dadurch, daß der Verankerungsabschnitt 6' anstelle eines Außensechskantes ein Gewinde 7' aufweist, mit welchem der Verankerungsabschnitt 6' im Implantatpfosten 4' festgeschraubt werden kann.

Durch die Keramikmanschette 13 hindurch greift ein Zapfen 12, welcher den Befestigungsabschnitt 10 mit dem Verankerungsabschnitt 6' verbindet.

Im Zapfen 12 ist nämlich ein Innengewinde vorgesehen, welches mit einem entsprechenden Außengewinde an einem vom Eingriffsteil 6' her axial in den Zapfen 12 ragenden Zapfen 12' verschraubt werden kann.

Im Befestigungsabschnitt 10 kann bei nicht dargestellten Ausführungsbeispielen eine von oben her zugängliche axiale Bohrung mit Innengewinde vorgesehen sein, die eine zum Außengewinde des Eingriffteils 6' entgegengesetzte Drehrichtung aufweist. Damit kann über eine Schraube oder einen entsprechenden Gewindeabschnitt die Suprakonstruktion 9' am Befestigungsabschnitt 10 des Aufbauteils festgeschraubt werden. Die axiale Bohrung kann als eine Sackbohrung oder auch als eine Durchgangsbohrung ausgeführt sein. Ebenso könnten in anderen Ausführungsbeispielen anstelle eines Innengewindes ein Innensechskant oder ein Innenachtkant in der axialen Bohrung ausgebildet sein, in die ein entsprechendes Werkzeug zur Montage des Aufbauteils auf dem Implantatpfosten 4 eingreifen kann. Ebenso kann auch vom Implantatpfosten her ein derartiger Innensechskant oder Innenachtkant in eine entsprechend ausgebildete Ausnehmung am Verankerungsabschnitt des Aufbauteils eingreifen.

Zusätzlich zu den oben genannten, insbesondere erfindungsgemäßen Merkmalen des Aufbauteils können auch noch viele weitere Merkmale hinzukommen, damit das Aufbauteil geometrisch kompatibel mit handelsüblichen Implantatspfosten einerseits und mit zahnärztlichen Suprakonstruktionen andererseits gestaltet werden kann.

## Patentansprüche

1. Aufbauteil für zahnärztliche Suprakonstruktionen wie Stege, Kronen, Brücken usw. zur Verankerung in einem im Kiefer eines Patienten implantierten Implantatpfosten, mit einem pfosten-seitigen Verankerungsabschnitt zum Einstecken oder Einschrauben des Aufbauteils in eine axiale Aufnahmebohrung des Implantatpfostens,
dadurch gekennzeichnet,
daß das Aufbauteil pfosten-seitig eine umlaufende, auf der aus dem Kieferknochen (2) herausragenden Oberseite des Implantatpfostens (4; 4') plan aufliegende Abschlußplatte (14) aus Metall, vorzugsweise aus Titan, aufweist, die im aufmontierten Zustand des Aufbauteils auf dem Implantatpfosten (4; 4') die Aufnahmebohrung (5) des Implantatpfostens (4; 4') nach außen hin nahezu hermetisch abschließt, und daß auf der pfosten-abgewandten Seite der Abschlußplatte (14) eine umlaufende Manschette (13) aus Keramik, vorzugsweise aus AlO₂-Material,befestigt, vorzugsweise aufgesintert oder aufgeklebt ist.

2. Aufbauteil nach Anspruch 1, dadurch gekennzeichnet, daß die Keramikmanschette (13) eine axiale Höhe zwischen 0,5 und 5 mm, vorzugsweise zwischen 1 und 3,5 mm aufweist.

3. Aufbauteil nach einem der Ansprüche 1 oder 2, dadurch gekennzeichnet, daß die Keramikmanschette (13) einen mittleren Außendurchmesser zwischen 3 und 6 mm aufweist.

4. Aufbauteil nach Anspruch 3, dadurch gekennzeichnet, daß Keramikmanschetten (13) in einem abgestuften Sortiment von Außendurchmessern, vorzugsweise 3,5 mm, 3,8 mm, 4,0 mm und 4,5 mm vorhanden sind.

5. Aufbauteil nach einem der vorhergehenden Ansprüche, dadurch gekennzeichnet, daß die Keramikmanschette im wesentlichen zylindrisch ist.

6. Aufbauteil nach einem der Ansprüche 1 bis 4, dadurch gekennzeichnet, daß die Keramikmanschette (13) konisch auf die Abschlußplatte (14) zulaufend geformt ist.

7. Aufbauteil nach einem der vorhergehenden Ansprüche, dadurch gekennzeichnet, daß die Keramikmanschette (13) auf ihrer der Abschlußplatte (14) abgewandten Seite eine kalottenförmige oder konische, nach außen sich erweiternde Ausnehmung zur Aufnahme kugel-, kegel- oder zylinderförmiger Teile aufweist.

8. Aufbauteil nach einem der vorhergehenden Ansprüche, dadurch gekennzeichnet, daß die Abschlußplatte (14) eine Dicke von 0,01 bis 0,1 mm hat.

9. Aufbauteil nach einem der vorhergehenden Ansprüche, dadurch gekennzeichnet, daß die Abschlußplatte (14) dieselbe radiale Erstreckung wie die Keramikmanschette (13) an ihrer Auflagefläche auf der Abschlußplatte (14) aufweist.

10. Aufbauteil nach einem der vorhergehenden Ansprüche, dadurch gekennzeichnet, daß der Verankerungsabschnitt (6; 6') geometrisch kompatibel mit handelsüblichen Implantatpfosten mit Schraub- oder Steckanschluß gestaltet ist.

11. Aufbauteil nach Anspruch 10, dadurch gekennzeichnet, daß der Verankerungsabschnitt (6; 6') ein an die Aufnahmebohrung (5; 5') des Implantatpfostens (4; 4') angepaßtes, in diese einsteckbares Eingriffsteil aufweist.

12. Aufbauteil nach Anspruch 11, dadurch gekennzeichnet, daß eine durch eine axiale Durchgangsbohrung des Aufbauteils, die vorzugsweise als Gewindebohrung ausgestaltet ist, in die Aufnahmebohrung des Implantatpfostens greifende Befestigungsschraube zur Befestigung des Aufbauteils und/oder der Suprakonstruktion am Implantatpfosten vorgesehen ist.

13. Aufbauteil nach Anspruch 11, dadurch gekennzeichnet, daß am Eingriffsteil des Verankerungsabschnitts (6) ein Außengewinde (7') vorgesehen ist, das in ein entsprechendes Innengewinde in der Aufnahmebohrung (5') des Implantatpfostens (4') eingreift.

14. Aufbauteil nach Anspruch 13, dadurch gekennzeichnet, daß in einer axialen, vom Befestigungsabschnitt (10) her zugänglichen Bohrung des Aufbauteils ein Innengewinde mit zur Drehrichtung des Außengewindes am Eingriffsteil (6') entgegengesetzter Drehrichtung vorgesehen ist.

15. Aufbauteil nach Anspruch 13, dadurch gekennzeichnet, daß in einer axialen, vom Befestigungsabschnitt her zugänglichen Bohrung des Aufbauteils ein Innensechskant oder ein Innenachtkant ausgebildet ist.

16. Aufbauteil nach Anspruch 14 oder 15, dadurch gekennzeichnet, daß die axiale Bohrung im Aufbauteil eine Sackbohrung ist.

17. Aufbauteil nach Anspruch 14 oder 15, dadurch gekennzeichnet, daß die axiale Bohrung im Aufbauteil eine Durchgangsbohrung ist.

18. Aufbauteil nach einem der vorhergehenden Ansprüche, dadurch gekennzeichnet, daß das Aufbauteil pfosten-seitig eine als Innensechskant oder Innenachtkant ausgebildete axiale Ausnehmung aufweist, in welche ein entsprechender aus dem Implantatpfosten herausragender Außensechskant bzw. Außenachtkant eingreift.
